# FASCICULE DE BREVET EUROPEEN

(11) **EP 2 725 721 B1**
(45) Date de publication et mention de la délivrance du brevet: **25.09.2019**
(21) Numéro de dépôt: 13189105.3
(22) Date de dépôt: 17.10.2013
(51) Int. Cl.: H04B 7/185, H04B 7/204, H04B 7/26

(54) **Méthode d'allocation dynamique de ressources partagées dans un plan temps-frequence et dispositif associé**
Dynamische Zuordnung von aufgeteilten Ressourcen in einem Zeit-Frequenz-Plan, und entsprechende Vorrichtung
Method for dynamic allocation of shared resources in a time-frequency plane and related device

(30) Priorité: 24.10.2012 FR 1202833
(43) Date de publication de la demande: 30.04.2014
(73) Titulaire: Thales, 92400 Courbevoie (FR); Centre National d'Etudes Spatiales, 75039 Paris Cedex 01 (FR)
(72) Inventeur: Bacquet, Pierre, 31037 Toulouse (FR); Daymand, Charles, 31037 Toulouse (FR); Arnaud, Mathieu, 31037 Toulouse (FR)
(74) Mandataire: Hammes, Pierre

(56) Documents cités:
- FR-A1- 2 874 147
- US-A1- 2011 235 602
- US-B1- 6 539 003
- KI-DONG LEE ET AL: "Optimal scheduling for timeslot assignment in MF-TDMA broadband satellite communications", VTC 2002-FALL. 2002 IEEE 56TH. VEHICULAR TECHNOLOGY CONFERENCE PROCEEDINGS. VANCOUVER, CANADA, SEPT. 24 - 28, 2002; [IEEE VEHICULAR TECHNOLGY CONFERENCE], NEW YORK, NY : IEEE, US, vol. 3, 24 septembre 2002 (2002-09-24), pages 1560-1564, XP010608691, DOI: 10.1109/VETECF.2002.1040478 ISBN: 978-0-7803-7467-6
- "Digital Video Broadcasting (DVB); Interaction channel for satellite distribution systems; ETSI EN 301 790", IEEE, LIS, SOPHIA ANTIPOLIS CEDEX, FRANCE, vol. BC, no. V1.3.1, 1 mars 2003 (2003-03-01), XP014003845, ISSN: 0000-0001

## Description

L'invention concerne le domaine des réseaux de communication à allocation de ressources de communication partagées, comme par exemple les réseaux de communication par satellite.

L'invention a notamment pour objet une méthode d'allocation dynamique de ressources partagées entre plusieurs utilisateurs d'un même réseau ou système de communication. L'expression ressources partagées désigne, dans le contexte de la présente invention, des ressources de communication allouées à un utilisateur sous la forme d'intervalles temporels et de bandes de fréquences centrées sur une fréquence porteuse donnée. Un arrangement particulier de l'ensemble des intervalles temporels et des porteuses associées est appelé plan temps/fréquence. L'allocation de ressources par plan temps/fréquence est une technique connue de l'homme de l'art selon l'acronyme anglo-saxon MF-TDMA (Multi Frequency Time Division Multiple Access).

Un objectif d'une méthode d'allocation de ressources partagées est d'assurer un partage optimal des ressources de communication à l'ensemble des utilisateurs du réseau de sorte à éviter les collisions lorsque deux utilisateurs ou plus tentent de communiquer sur les mêmes intervalles temporels et fréquentiels.

Par la suite, l'invention est décrite dans le cadre d'un exemple particulier de réseau de communication par satellite pour lequel plusieurs utilisateurs communiquent avec une station de gestion de communication par satellite par le biais d'une voie de retour. Un tel réseau par satellite peut, par exemple mettre en oeuvre la norme DVB-S (Digital Video Broadcasting Satellite) ou ses évolutions sur la voie directe de diffusion entre la station de gestion et les utilisateurs et la norme DVB-RCS (Digital Video Broadcasting-Return Channel Satellite) ou ses évolutions sur la voie de retour entre les utilisateurs et la station de gestion de communication.

L'invention est décrite par la suite dans le contexte particulier de l'évolution de seconde génération de la norme DVB-RCS, communément désignée par l'acronyme DVB-RCS2 et décrite notamment dans le document « Digital Video Broadcasting (DVB) : Second generation DVB interactive satellite system ; part 2 : lower layers for satellite standard, DVB document ETSI EN 301 545-2 v1.1.1 (2012-01) » L'invention peut également s'appliquer de façon équivalente à tout autre réseau de communication dans lequel un problème de partage des ressources entre utilisateurs se pose de façon similaire.

Dans un réseau de communication mettant en oeuvre le standard DVB-RCS, l'accès à la communication sur la voie de retour se fait au moyen d'un plan temps/fréquence de type MF-TDMA (Multi Frequency - Time Division Multiple Access) défini à l'avance par l'opérateur et signalé aux utilisateurs.

Selon ce standard, la voie de retour est subdivisée en super trames, elles mêmes divisées en trames qui sont elles mêmes divisées en intervalles temporels et fréquentiels. Une super trame définit le plan temps/fréquence choisi, elle correspond à une portion choisie de temps et de fréquences. Au sein d'une super trame, les trames et intervalles temporels sont classés du début du premier intervalle temporel et de la fréquence la plus basse jusqu'à la fin du dernier intervalle temporel et la fréquence la plus élevée. Chaque trame d'une super trame définit une portion du plan temps/fréquence utilisable.

L'accès aux ressources se fait en allouant à chaque utilisateur un ou plusieurs intervalles temporels et une ou plusieurs porteuses au sein d'une trame au moyen de messages de signalisation dédiés transmis par la station de gestion de communications.

Un aspect important pour garantir le fonctionnement correct de l'accès partagé aux ressources définies par le plan temps/fréquence concerne la synchronisation temporelle et fréquentielle entre chaque utilisateur et la station de gestion de communications. En effet, les utilisateurs doivent synchroniser leurs horloges internes avec celle de ladite station de sorte qu'ils communiquent effectivement dans les intervalles temporels et fréquentiels qui leur sont alloués sans interférer dans les intervalles voisins qui peuvent être alloués à d'autres utilisateurs.

Pour garantir la synchronisation de tous les utilisateurs, une solution, compatible du standard DVB-RCS, est de prévoir un arrangement de plan temps/fréquence qui consiste à insérer un ou plusieurs intervalles de synchronisation à la fin de chaque porteuse d'une trame. Chaque terminal émet un message de synchronisation dans un intervalle dédié afin de signaler sa présence à la station de gestion de communications qui récupère ce message, réalise des mesures de synchronisation et retransmet à l'utilisateur des informations lui permettant de se resynchroniser.

Les intervalles d'une trame alloués à la synchronisation ne sont pas exploitables pour communiquer et ainsi les ressources de communication allouables sont diminuées. L'utilisation d'un ou plusieurs intervalle(s) de synchronisation réservé(s) par porteuse permet d'assurer un fonctionnement correct du réseau même lorsque celui-ci fonctionne à charge maximum. Cependant, cette approche conduit à une surréservation des ressources dédiées à la synchronisation au détriment des ressources dédiées à la communication lorsque le système ne fonctionne pas à charge maximum.

Ce problème est d'autant plus impactant lorsque le nombre de porteuses par trame est augmenté du fait par exemple d'une dégradation du bilan de liaison qui conduit à réduire la bande passante d'une porteuse. Dans un tel cas, les ressources disponibles se font plus rares car certaines porteuses peuvent présenter un bilan de liaison significativement dégradé, il existe donc un besoin d'augmenter les ressources dédiées à la communication.

Plus généralement, un problème visé par la présente invention concerne l'adaptation aux variations de charge du réseau des ressources disponibles, entre celles dédiées à la communication et celles dédiées à la synchronisation.

Le document US2011/235602 divulgue une méthode d'allocation de ressources partagées selon l'art antérieur.

On connait la demande de brevet française publiée sous le numéro FR2874147 qui décrit un dispositif d'allocation de ressources partagées d'un réseau de communication par attribution d'intervalles temporels d'un plan temps/fréquence adaptable dynamiquement. Cette demande décrit le principe d'allocation dynamique de porteuses en faisant varier la largeur de bande des porteuses d'une trame en fonction notamment du bilan de liaison.

Cependant, la problématique du partage optimal des ressources disponibles entre celles dédiées à la communication et celles dédiées à la synchronisation n'est pas abordé.

L'invention propose une méthode d'allocation de ressources partagées qui permet d'allouer dynamiquement des ressources temporelles et fréquentielles soit à des fins de synchronisation soit à des fins de communication en fonction de la charge du réseau.

L'invention permet d'optimiser la répartition des ressources entre celles dédiées à la synchronisation des récepteurs et celles dédiées à la communication.

L'invention s'applique avantageusement dans le contexte de l'allocation de ressources partagées sur la voie de retour d'un système de communication par satellite bidirectionnel. En particulier, l'invention s'applique pour un système compatible du standard DVB-RCS2 ou de ses évolutions.

L'invention a notamment pour objet une méthode d'allocation dynamique de ressources partagées dans un réseau de communication consistant à définir dans un plan temps-fréquence une super-trame de durée donnée ΔT et de largeur spectrale donnée Δf, constituée d'au moins une trame, définissant une grille temps-fréquence régulière dont une case, appelée unité temps-fréquence, constitue le plus petit intervalle temporel et fréquentiel allouable à un utilisateur dudit réseau au sein de ladite trame, ladite méthode consistant à réserver, sur chaque fréquence porteuse d'une trame, au moins un bloc d'un nombre K, supérieur ou égal à 1, d'unités temps-fréquence pouvant être dynamiquement allouées à un utilisateur soit pour communiquer soit pour se synchroniser, le choix du nombre d'unités temps-fréquence allouées à un utilisateur pour se synchroniser étant effectué en fonction du nombre d'utilisateurs connectés au réseau de communication.

Selon un aspect particulier de l'invention, le nombre d'unités temps-fréquence par trame allouées pour la synchronisation est au moins égal au nombre minimum Nᵤ d'unités temps-fréquence par trame nécessaire pour assurer la synchronisation de tous les utilisateurs connectés, ce nombre minimum Nᵤ étant égal à la valeur arrondie du ratio de la durée d'une super-trame par la période de synchronisation d'un utilisateur, que multiplie le nombre d'utilisateurs connectés au réseau.

Selon un aspect particulier de l'invention, on réserve, dans une trame, un nombre N_{B} de blocs de K unités temps-fréquence pour la synchronisation des utilisateurs, ce nombre N_{B} étant égal à la partie entière par excès du ratio entre ledit nombre minimum Nᵤ d'unités temps-fréquence par trame nécessaire pour assurer la synchronisation de tous les utilisateurs connectés et le nombre K d'unités temps-fréquence par bloc, les autres blocs de K unités temps-fréquence étant réservés pour la communication des utilisateurs.

Selon un aspect particulier de l'invention, les blocs de K unités temps-fréquence réservés pour la synchronisation des utilisateurs sont répartis de façon régulière sur l'ensemble des fréquences porteuses d'une trame.

Selon un aspect particulier de l'invention, dans les blocs de K unités temps-fréquence réservés pour la synchronisation des utilisateurs, on alloue un nombre Nᵤ d'unités temps-fréquence à la synchronisation par accès réservé à un utilisateur, ledit nombre Nᵤ étant égal au nombre minimum d'unités temps-fréquence par trame nécessaire pour assurer la synchronisation de tous les utilisateurs connectés, les unités temps-fréquence restantes au sein desdits blocs étant allouées à la synchronisation des utilisateurs par accès aléatoire ou à la communication des utilisateurs.

Selon un aspect particulier de l'invention, lesdits blocs réservés pour la synchronisation des utilisateurs sont positionnés en fin de porteuse.

Selon un aspect particulier de l'invention, un bloc de K unités temps-fréquence réservé à la communication des utilisateurs est regroupé pour former une unité de communication.

Selon un aspect particulier de l'invention, pour allouer à un utilisateur une unité temps-fréquence réservée pour la synchronisation au sein d'un bloc d'une fréquence porteuse :
- on calcule, pour chaque utilisateur connecté audit réseau, le ratio entre la variation de fréquence entre la fréquence porteuse dudit bloc et la dernière fréquence porteuse sur laquelle l'utilisateur a communiqué et l'intervalle temporel entre la dernière unité temps-fréquence utilisée par l'utilisateur pour communiquer et l'unité temps fréquence réservée pour la synchronisation à allouer,
- on alloue ladite unité temps-fréquence réservée pour la synchronisation à l'utilisateur pour lequel ledit ratio est le plus faible.

Dans une variante de réalisation de l'invention, une super-trame est constituée de la concaténation d'au moins une première trame composée uniquement d'unités temps-fréquence allouées à la communication des utilisateurs et d'une seconde trame composée desdits blocs de K unités temps fréquence réservées sur chaque fréquence porteuse pour être dynamiquement allouées à un utilisateur pour communiquer ou pour se synchroniser.

Selon un aspect particulier de l'invention, la configuration d'allocation des unités-temps fréquence de chaque trame d'une super-trame à la communication ou à la synchronisation est transmise aux utilisateurs périodiquement, avec une période égale à la durée d'une super-trame.

Selon un aspect particulier de l'invention, le nombre K d'unités temps-fréquence par bloc est égal à 6 et peut être décomposé en 6 unités allouées à la synchronisation des utilisateurs ou 3 unités allouées à la synchronisation des utilisateurs et 3 unités, regroupées, allouées à la communication des utilisateurs ou à 6 unités, regroupées, allouées à la communication des utilisateurs.

Selon un aspect particulier de l'invention, ladite méthode est compatible du standard DVB-RCS2.

L'invention a également pour objet un dispositif d'allocation dynamique de ressources partagées pour la communication et la synchronisation d'une pluralité de terminaux utilisateurs dans un réseau de communication, caractérisé en ce qu'il comprend des moyens adaptés pour mettre en oeuvre la méthode d'allocation dynamique selon l'invention.

Selon un aspect particulier de l'invention, lesdites ressources allouées sont celles de la voie de retour entre lesdits terminaux utilisateurs et ledit dispositif.

L'invention a également pour objet un équipement de gestion de communications par satellite comportant des moyens pour communiquer avec une pluralité de terminaux utilisateurs à travers une liaison par satellite selon une voie directe et une voie de retour et un dispositif d'allocation dynamique de ressources partagées sur la voie de retour selon l'invention.

D'autres caractéristiques et avantages de la présente invention apparaîtront mieux à la lecture de la description qui suit en relation aux dessins annexés qui représentent :
- La figure 1, un exemple de système de communication satellitaire comportant un dispositif d'allocation de ressources partagées selon l'invention,
- La figure 2, un exemple d'arrangement d'un plan temps-fréquence en plusieurs trames ainsi que l'allocation d'unités temps-fréquence à l'intérieur de ces trames,
- La figure 3, illustre la grille temps-fréquence effective pendant une période ΔT donnée selon l'allocation indiquée à la figure 2,
- La figure 4, un exemple d'allocation statique d'intervalles temporels de synchronisation,
- La figure 5, une illustration du principe d'allocation d'intervalles temporels génériques pour une porteuse donnée selon l'invention, un intervalle temporel générique pouvant être affecté à un intervalle de communication ou de synchronisation,
- La figure 6, une illustration du principe d'allocation d'intervalles temporels génériques pour une trame selon l'invention,
- La figure 7, un exemple particulier d'allocation dynamique d'intervalles temporels génériques en fonction du nombre d'utilisateurs connectés au réseau,
- La figure 8, une illustration, pour l'exemple de la figure 6, de la stratégie d'allocation des intervalles temporels génériques définis aux utilisateurs du réseau,
- La figure 9, une illustration d'un second mode de réalisation de l'invention dans lequel les intervalles temporels génériques sont générés dans une seconde trame distincte de la première trame allouée spécifiquement à la communication,
- La figure 10, un schéma illustrant la structure d'une table de signalisation de la composition d'une trame conçue selon le premier mode de réalisation de l'invention,
- La figure 11, un schéma illustrant la structure des tables de signalisation de la composition de deux trames conçues selon le second mode de réalisation de l'invention.

L'invention est à présent décrite dans le contexte d'un système de communication par satellite entre une station satellitaire et une pluralité de récepteurs et plus précisément pour l'allocation de ressources partagées sur la voie de retour entre les récepteurs et la station satellitaire.

L'invention est décrite pour un mode de réalisation correspondant à une mise en oeuvre compatible du standard DVB-RCS2 mais n'est pas limitée à ce seul standard. L'Homme de l'art saura, à la lecture de la description qui suit, mettre en oeuvre la méthode selon l'invention pour tout autre système de communication, terrestre ou satellitaire, à ressources partagées pour lequel l'allocation des ressources est effectuée selon un plan temps-fréquence.

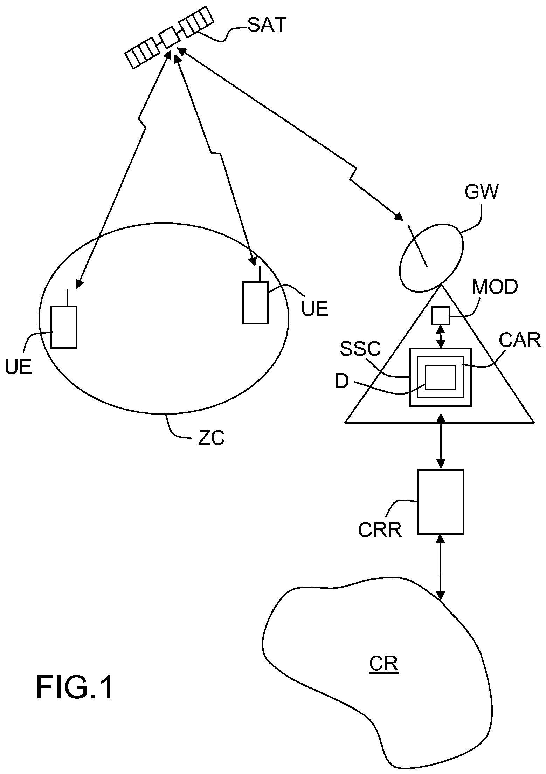

La figure 1 illustre sur un schéma, un système de communication satellitaire qui comporte au moins un équipement de gestion de communications, représenté à la figure 1 sous la forme d'une station satellitaire GW (ou « Gateway » en anglais), raccordée au coeur de réseau CR par un contrôleur de réseau radio CRR, et au moins un satellite de télécommunications SAT agissant en tant que relai ou transpondeur entre la station satellitaire GW et des terminaux utilisateurs UE équipés d'un émetteur/récepteur satellitaire.

Un terminal utilisateur UE peut être tout équipement de réseau capable d'échanger et de communiquer via une liaison sans fils, soit avec un autre équipement soit avec son propre réseau de rattachement. Il peut s'agir en particulier d'un ordinateur fixe ou portable, d'un téléphone fixe ou portable, d'un assistant personnel numérique, d'un serveur ou encore d'un modem d'accès à l'Internet par satellite.

La station satellitaire GW est notamment chargée du traitement du signal reçu et de la gestion des demandes d'accès, par les différents utilisateurs UE, au réseau satellitaire. Le satellite SAT est par ailleurs associé à une ou plusieurs cellules radio qui se trouvent placées dans chacune de ses zones de couverture ZC. Dans l'exemple illustré à la figure 1, le satellite SAT ne couvre qu'une seule cellule, ce qui correspond à un unique faisceau.

La station satellitaire GW comprend notamment un sous-système de contrôle de voie retour (ou « return link sub system » en anglais) SSC comportant un contrôleur d'allocation de ressources CAR chargé, notamment de contrôler un modem MOD. En outre, le sous-système de contrôle de voie retour SSC fournit les fonctions de contrôle et de surveillance de la voie de retour, c'est-à-dire des terminaux d'utilisateurs UE vers la station satellite GW, et génère la signalisation nécessaire au fonctionnement de cette voie retour. Le contrôleur d'allocation de ressources CAR assure en outre les fonctions de contrôle d'accès aux ressources partagées de la voie retour.

La station satellitaire GW comporte en outre un dispositif D d'allocation de ressources partagées selon l'invention qui est en charge de gérer de façon efficace et adaptative les ressources du réseau sur la voie retour et en particulier leur partage entre ressources dédiées à la communication et ressources dédiées à la synchronisation.

Comme cela est illustré à la figure 1, le dispositif D selon l'invention est préférentiellement implanté dans le contrôleur d'allocation de ressources CAR mais il pourrait également faire partie du sous-système de contrôle de voie retour SSC et être couplé au contrôleur d'allocation de ressources CAR, ou bien être externe au sous-système de contrôle de voie retour SSC tout en étant couplé à celui-ci.

Le dispositif D comprend des moyens adaptés pour mettre en oeuvre la méthode d'allocation partagée de ressources selon l'invention qui est à présent décrite.

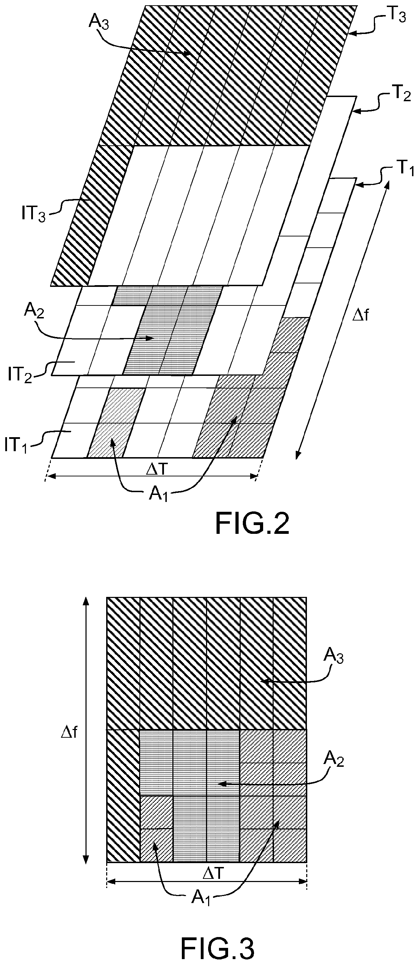

La figure 2 illustre sur un diagramme temps-fréquence, un exemple d'arrangement particulier de plusieurs trames T1, T2, T3 définies par le dispositif D pour élaborer la stratégie d'allocation de ressources partagées.

Chaque trame T1, T2, T3 est ici définie par une zone continue du plan temps-fréquence qui couvre toute la bande de fréquence Δf allouable aux utilisateurs pour communiquer et qui présente une durée fixe ΔT. Chaque trame T1, T2, T3 est également définie par une grille temps-fréquence découpée en unités temps-fréquence IT1, IT2, IT3 qui correspondent à la plus petite ressource allouable à un utilisateur. En général la durée en temps d'une unité temps-fréquence est également fixe, par contre la bande de fréquence couverte par une unité temps-fréquence peut varier en fonction de la définition de la grille temps-fréquence de chaque trame comme cela est illustré à la figure 2. En effet la bande de fréquence Δf couverte par une trame peut être décomposée en porteuses de largeur variable. Sur l'exemple de la figure 2, la trame T1 comporte deux fois plus de porteuses que la trame T2 qui elle-même comporte deux fois plus de porteuses que la trame T3. De cette manière, il est possible d'adapter les ressources fréquentielles allouables à un utilisateur en fonction de ses besoins en termes de capacité de débit de symboles mais aussi de prendre en compte les phénomènes de perturbation, comme les évènements de pluie, qui peuvent amener à privilégier, pour un utilisateur donné, une porteuse plus robuste en termes de bilan de liaison mais qui présente un débit disponible moindre.

Au sein de chaque plan temps-fréquence, le dispositif D d'allocation de ressources définit une ou plusieurs trames T1, T2, T3 qui sont constituées d'une ou plusieurs unités temps-fréquence IT1, IT2, IT3. La méthode d'allocation de ressources consiste ensuite à allouer à chaque utilisateur une ou plusieurs unités temps-fréquence d'une trame pour ses besoins de communication et/ou de synchronisation. Sur la figure 2, les allocations de ressources A1, A2 et A3 dans chacune des trames T1, T2 et T3 sont représentées par des zones hachurées.

La figure 3 représente la décomposition du plan temps-fréquence selon les allocations de ressources A1, A2, A3 définies à partir des trois types de trame T1 ,T2,T3 disponibles.

Sans sortir du cadre de l'invention, d'autres types de trames peuvent être définis, notamment des trames dont la durée est inférieure à la durée ΔT maximale de la zone du plan temps-fréquence allouable ou dont la largeur de bande est également inférieure à la largeur de bande maximale Δf allouable.

Le motif d'allocation de ressources représenté à la figure 3 couvre une zone de durée ΔT et de largeur de bande Δf du plan temps-fréquence. L'allocation de ressources est réitérée à chaque nouvelle occurrence temporelle d'une zone de mêmes dimensions (ΔT, Δf) dans le plan temps-fréquence. Autrement dit, la durée ΔT correspond à la période à laquelle l'allocation de ressources partagées est renouvelée.

L'ensemble constitué des trames T1, T2, T3 est appelé super-trame. Une super-trame contient l'ensemble des trames possibles. Sa durée est égale à la période d'allocation ΔT. La définition d'une super-trame, en particulier sa durée ΔT et sa largeur de bande fréquentielle Δf, ainsi que la définition des trames T1, T2, T3 qui la composent sont communiquées aux utilisateurs par la station satellitaire GW via la voie directe de diffusion au moyen de données de signalisation, par exemple sous forme de tables. En général ces définitions n'évoluent pas ou évoluent et son retransmises à un rythme lent. L'allocation à un utilisateur d'une unité temps-fréquence au sein d'une trame donnée est par contre réalisée fréquemment, à la fin de chaque occurrence d'une allocation du plan temps-fréquence sur la durée d'allocation ΔT et également au moyen de données de signalisation, par exemple sous forme de table.

A titre d'exemple, la norme DVB-RCS2 définit trois types de tables de signalisation. La table de composition d'une super-trame SCT2 (« Super-frame Composition Table » en anglais) définit la couverture globale du plan temps-fréquence. La table de composition d'une trame FCT2 (« Frame Composition Table » en anglais) définit la structure des trames au sein d'une super-trame. Ces deux tables SCT2, FCT2 sont transmises aux utilisateurs peu fréquemment car l'organisation du plan temps-fréquence est en général fixée une fois pour toute et son changement implique des modifications des modulateurs et démodulateurs du système de communication. La table d'allocation d'unités temps-fréquence aux utilisateurs appelée TBTP2 (« Terminal Burst Time Plan » en anglais) définit précisément la répartition des unités des différentes trames pour la communication et la synchronisation simultanée des utilisateurs du réseau. Cette table est transmise à chaque nouvelle allocation.

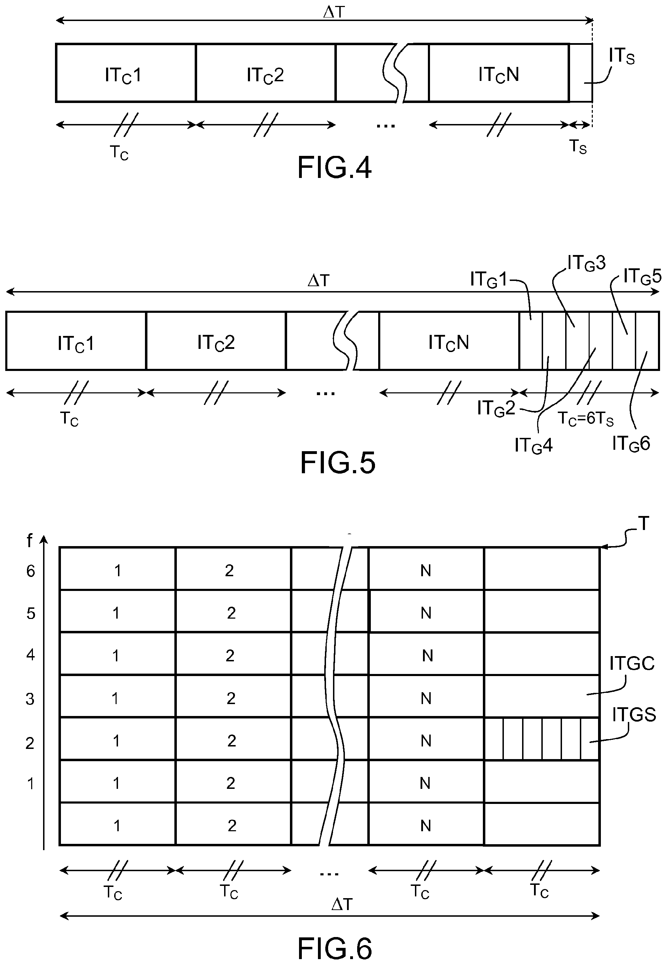

La figure 4 schématise la répartition, pour une porteuse donnée d'une trame, entre les ressources allouées aux utilisateurs pour communiquer et celles allouées pour se synchroniser selon une méthode d'allocation statique. Une telle allocation consiste à affecter une unité temps-fréquence IT_{S} en fin de chaque porteuse d'une trame à la synchronisation entre un terminal utilisateur UE et la station satellitaire GW. Toutes les autres unités temps-fréquence ITC₁, ITC₂, .., ITC_{N} sont réservées pour la communication. Une unité allouée à la communication est en principe constituée du regroupement de plusieurs unités temps-fréquence, par exemple 6 unités dans le cas de la figure 4 car la communication entre un terminal utilisateur et la station satellitaire nécessite des unités de temps de durée plus élevée que celles nécessaires à la synchronisation. Une telle méthode d'allocation statique ne prend pas en compte le nombre d'utilisateurs connectés au réseau à un instant donné et sa variation au cours du temps et induit donc une surréservation des ressources de synchronisation d'autant plus élevée que le nombre de porteuses dans une trame est important.

La figure 5 schématise le principe à la base de la méthode d'allocation dynamique de ressources partagées selon l'invention. Chaque porteuse de chaque trame est décomposée en un nombre N+1 d'intervalles temporels de même durée T_{C}, chaque intervalle temporel est composé de plusieurs unités temps-fréquence, 6 dans l'exemple de la figure 5. Le nombre d'unités temps-fréquence composant un intervalle temporel est configuré en fonction des besoins de communication des utilisateurs et plus directement en fonction de la durée minimale d'un intervalle de communication. Les N premiers intervalles ITC₁, ITC₂, .., ITC_{N} ainsi composés sont réservés pour l'allocation aux besoins de communication, tout comme dans la solution d'allocation statique présentée à la figure 4. Le dernier intervalle temporel est constitué de 6 unités temps-fréquence génériques ITG₁, ITG₂, ITG₃, ITG₄, ITG₅, ITG₆, c'est-à-dire des unités qui peuvent être allouées indifféremment à des besoins de communication ou de synchronisation. La méthode d'allocation dynamique selon l'invention consiste alors, pour chaque porteuse de chaque trame, à définir quelles unités génériques doivent être réservées pour des besoins de communication ou de synchronisation puis d'établir une stratégie d'allocation des unités de communication et de synchronisation aux utilisateurs connectés en fonction des besoins globaux du réseau et des allocations déjà établies pour les N premiers intervalles d'une porteuse.

La figure 6 illustre le principe d'allocation dynamique pour une trame T comprenant 7 porteuses fréquentielles indexées de 0 à 6.

Les derniers intervalles temporels de durée totale T_{C} égale à celle d'un intervalle alloué aux besoins de communication sont réservés en tant qu'unités temps-fréquence génériques. Ces unités génériques peuvent être soit affectées intégralement aux besoins de synchronisation soit regroupées pour former un intervalle de communication, soit encore partiellement allouées aux besoins de synchronisation et aux besoins de communication.

Dans l'exemple de la figure 6, les 6 unités génériques de la porteuse numéro 2 sont toutes affectées à des unités de synchronisation ITGS. Les unités génériques des autres porteuses sont toutes regroupées pour former des intervalles de communication ITGC. Un cas non représenté à la figure 6 consisterait à affecter, sur une même porteuse, 3 unités génériques à des unités de synchronisation et à regrouper les 3 autres unités génériques pour former un intervalle de communication court dont la durée est égale à la moitié de la durée T_{c} des autres intervalles de communication. Ce dernier cas est envisageable uniquement si le standard mis en oeuvre par le système de communication permet la configuration d'intervalles de communication avec deux types de durées différentes.

L'utilisation d'unités temps-fréquence génériques permet d'adapter les ressources allouées à la synchronisation aux besoins du réseau et ainsi de réaffecter certaines unités temps-fréquence habituellement allouées à la synchronisation à des besoins de communication.

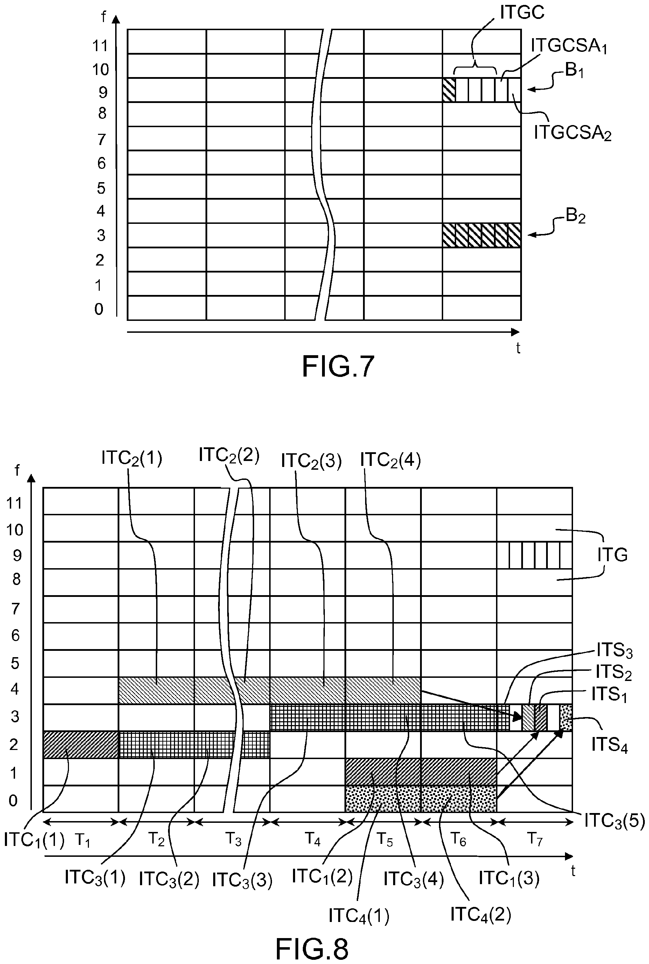

La figure 7 illustre, sur un exemple, la première étape de la méthode d'allocation de ressources selon l'invention consistant à affecter les unités temps-fréquence génériques de chaque porteuse d'une trame soit à des unités de synchronisation soit à des intervalles de communication.

Le choix du nombre d'unités de synchronisation à allouer se fait en fonction du nombre de terminaux utilisateur connectés. En pratique, une unité de synchronisation doit être allouée à chaque utilisateur périodiquement de sorte à éviter les dérives d'horloges entre terminaux et station satellite qui peuvent entrainer des désynchronisations. La période de synchronisation des terminaux, c'est-à-dire la période entre deux transmissions d'un message de synchronisation est prédéterminée, par exemple elle est prise égale à 1 seconde.

En fonction de la période de synchronisation, du nombre de terminaux utilisateur connectés à un instant donné et des caractéristiques de la trame, notamment sa durée, le dispositif d'allocation de ressources selon l'invention détermine le nombre d'unités de synchronisation minimum à affecter dans une trame. Ce nombre N_{U} peut être calculé comme la valeur arrondie du nombre (ΔT/P).M, où ΔT est la durée d'une super-trame, P la période de synchronisation et M le nombre d'utilisateurs connectés. Par valeur arrondie, on entend la partie entière ou la partie entière par excès, selon l'arrondi souhaité.

Une fois le nombre N_{U} d'unités de synchronisation par trame déterminé, on détermine le nombre N_{B} de blocs réservés à la synchronisation qui est égal à la partie entière par excès du ratio N_{U}/K où K est le nombre d'unités génériques disponibles dans un bloc à la fin de chaque porteuse. L'expression « partie entière par excès » signifie le plus petit nombre de blocs N_{B} tel que le produit de ce nombre N_{B} par le nombre K d'unités génériques dans un bloc soit supérieur ou égal à Nu. Les blocs d'unités génériques sont ensuite répartis de façon homogène sur les porteuses de la trame. Les unités génériques des trames restantes sont regroupées pour former un intervalle de communication.

La figure 7 illustre la méthode employée sur un exemple non limitatif où le nombre d'utilisateurs connectés est égal à M=7 et la durée d'une trame est égale à la période de synchronisation. Le nombre K d'unités génériques par porteuse est égal à 6, il est donc nécessaire de réserver 2 blocs de 6 unités génériques pour la synchronisation dans une trame. Ces 2 blocs B1, B2 sont répartis de façon régulière en fréquence sur les porteuses dans l'objectif de limiter les sauts de fréquence à effectuer par un terminal utilisateur pour passer d'une porteuse sur laquelle il communique à une autre porteuse sur laquelle il est autorisé à se synchroniser. Par répartition régulière, on entend que l'espacement en fréquence entre deux blocs adjacents est sensiblement constant pour tous les blocs. Dans l'exemple de la figure 7, les deux blocs B1, B2 sont affectés aux porteuses d'indices 3 et 9 sur les 12 porteuses au total que comporte la trame mais ils pourraient également être affectés aux porteuses d'indice 4 et 8.

Parmi les blocs B1, B2 de 6 unités génériques réservés, un nombre N_{U} d'unités est affecté à des ressources de synchronisation. Les unités restantes au sein des blocs B1, B2 d'unités génériques réservés, qui n'ont pas été affectés aux besoins de synchronisation peuvent être réaffectés aux besoins de communication si le nombre d'unités restantes est suffisant pour les regrouper afin de former un intervalle de communication. Si leur nombre n'est pas suffisant, il est également possible d'affecter les unités restantes à des ressources de synchronisation aléatoire, c'est-à-dire des ressources qui ne sont pas réservées à un terminal utilisateur en particulier mais qui sont accessibles à tous les terminaux. La provision d'unités de synchronisation aléatoire peut être utile notamment lorsque les variations de charge du réseau sont plus rapides que le rythme auquel est réactualisée l'allocation dynamique des ressources partagées en fonction du nombre d'utilisateurs connectés.

Dans l'exemple de la figure 7, le nombre d'unités de synchronisation nécessaire est égal à 7, ce qui signifie que 12-7=5 unités génériques restent inutilisées. En fonction des contraintes du système sur la durée d'un intervalle de communication allouable, les 5 unités génériques peuvent être réaffectées à des ressources de communication totalement ou partiellement ou être affectées à des ressources de synchronisation à accès aléatoire. En pratique, le plus souvent, les contraintes du système imposent qu'un intervalle de communication doit avoir une durée fixe. Dans l'exemple de la figure 7, qui correspond au cas d'utilisation du standard DVB-RCS2, un intervalle de communication doit avoir une durée de 6 ou 3 unités temps-fréquence. Dans ce cas, les 5 unités génériques restantes peuvent être séparées en 2 unités de synchronisation à accès aléatoire ITGSA1, ITGSA2 et 3 unités regroupées pour former un intervalle de communication ITGC allouable à un utilisateur.

La figure 8 illustre la mise en oeuvre de la deuxième étape de la méthode d'allocation de ressources partagées selon l'invention qui consiste à partager les ressources de communication et de synchronisation créées à partir des unités temps-fréquence génériques entre les différents utilisateurs du réseau.

Les unités temps-fréquence de synchronisation sont allouées à un terminal utilisateur en fonction du gradient de fréquence entre la dernière fréquence utilisée par ce terminal pour communiquer et la fréquence occupée par l'unité de synchronisation.

La figure 8 illustre, sur un exemple non limitatif, le processus d'allocation des unités de synchronisation de la porteuse d'indice 3 à 4 terminaux utilisateurs connectés simultanément au réseau.

Au préalable, les unités de communication de la trame ont été allouées aux différents utilisateurs de la façon suivante. Le premier utilisateur s'est vu allouer l'unité ITC₁(1) correspondant au premier intervalle temporel T₁ de la trame et à la porteuse d'indice 2, puis l'unité ITC₁(2) correspondant au cinquième intervalle temporel T₅ de la trame et à la porteuse d'indice 1 puis l'unité ITC₁(3) correspondant au sixième intervalle temporel T₆ de la trame et à la porteuse d'indice 1. Le deuxième utilisateur s'est vu allouer les unités temps-fréquence ITC₂(1), ITC₂(2), ITC₂(3), ITC₂(4), toutes situées sur la porteuse d'indice 4. Le troisième utilisateur s'est vu allouer les unités temps-fréquence ITC₃(1), ITC₃(2) situées sur la porteuse d'indice 2 et les unités temps-fréquence ITC₃(3), ITC₃(4), ITC₃(5) situées sur la porteuse d'indice 3. Enfin le dernier utilisateur s'est vu allouer les unités temps-fréquence ITC₄(1), ITC₄(2) situées sur la porteuse d'indice 0.

L'allocation des unités temps-fréquence de communication sur les intervalles temporels T1 à T6 de la trame ne fait pas partie de l'invention et est réalisée par une méthode d'allocation de ressources partagées quelconque parmi celles connues de l'Homme de l'art.

Les unités de synchronisation situées sur la porteuse d'indice 3 sont allouées aux utilisateurs en fonction de la porteuse d'appartenance de la dernière unité-temps fréquence de communication allouée à un utilisateur. Le critère consiste à allouer les premières unités de synchronisation aux utilisateurs qui ont communiqué sur la même porteuse ou sur une porteuse voisine lors de leur dernier accès aux ressources au sein de la trame. A l'opposé, les utilisateurs qui ont communiqué sur une porteuse éloignée de la porteuse de synchronisation se voient attribuer les dernières unités de synchronisation du dernier bloc d'unités.

Sur l'exemple de la figure 8, la dernière communication du premier utilisateur se fait sur la porteuse d'indice 1, celle du second utilisateur se fait sur la porteuse d'indice 4, celle du troisième utilisateur se fait sur la porteuse d'indice 3 et celle du quatrième utilisateur se fait sur la porteuse d'indice 0. En conséquence, le troisième utilisateur n'aura pas besoin de changer de porteuse entre l'intervalle T6 et l'intervalle T7 donc il peut plus aisément se synchroniser sur la première unité ITS₃ que les autres utilisateurs qui doivent réaliser un saut de fréquence dans un temps très court. Le deuxième utilisateur doit sauter de la porteuse d'indice 4 à la porteuse d'indice 3. Le premier utilisateur doit sauter de la porteuse d'indice 1 à la porteuse d'indice 3. Le quatrième utilisateur doit sauter de la porteuse d'indice 0 à la porteuse d'indice 3. Les unités de synchronisation sont donc allouées dans leur ordre temporel d'apparition aux utilisateurs selon l'ordre croissant des gradients de fréquence entre la dernière porteuse de communication et la porteuse de synchronisation. Dans l'exemple de la figure 8, une première unité de synchronisation ITS₃ est allouée au troisième utilisateur puis une deuxième unité de synchronisation ITS₂ est allouée au deuxième utilisateur puis une troisième unité de synchronisation ITS₁ est allouée au premier utilisateur puis une quatrième unité de synchronisation ITS₄ est allouée au quatrième utilisateur. L'exemple de la figure 8 se limite au cas de 4 utilisateurs mais 7 utilisateurs peuvent se synchroniser sur la trame comme expliqué ci-dessus à l'appui de la figure 7.

De façon générale, le critère d'allocation des unités de synchronisation est établi de la façon suivante. Pour chaque utilisateur, la pente de variation de fréquence entre la dernière porteuse utilisée pour communiquer et la porteuse de synchronisation est calculée en hertz par seconde. Autrement dit on calcule le ratio entre la variation de fréquence entre les deux porteuses et l'intervalle temporel entre la dernière unité de communication utilisée et la première unité de synchronisation du bloc d'unités génériques réservées à cette fin. Ensuite on attribue la première unité de synchronisation à l'utilisateur qui présente le ratio le plus faible. On réitère le processus pour la deuxième unité de synchronisation du bloc puis pour les suivantes jusqu'à ce que tous les utilisateurs connectés, devant être synchronisés pendant une super-trame de durée ΔT, bénéficient d'une unité de synchronisation allouée.

Si plusieurs blocs d'unités de synchronisation sont réservés sur plusieurs porteuses lors de la première étape décrite à la figure 7, on procède à l'allocation de chaque unité de synchronisation d'un bloc d'une porteuse puis on réitère le processus pour la porteuse suivante et ainsi de suite.

Les exemples décrits ci-dessus à l'appui des figures 5, 6, 7 et 8 sont donnés à titre illustratifs pour la bonne compréhension de l'invention. La méthode d'allocation de ressources partagées selon l'invention ne se limite pas aux exemples donnés et en particulier aux valeurs numériques citées. En particulier, un bloc d'unités temps-fréquence génériques peut comporter un nombre quelconque différent de 6 unités. Dans une variante de réalisation de l'invention, il est également possible de réserver plus d'un bloc d'unités temps-fréquence génériques en fin de chaque porteuse si les besoins en synchronisation sont plus élevés ou si les variations de la charge du réseau présentent une amplitude plus grande. Dans une autre variante de réalisation de l'invention, le ou les blocs d'unités temps-fréquence génériques peuvent également être choisis non pas en fin de porteuse mais à un autre emplacement temporel de la trame.

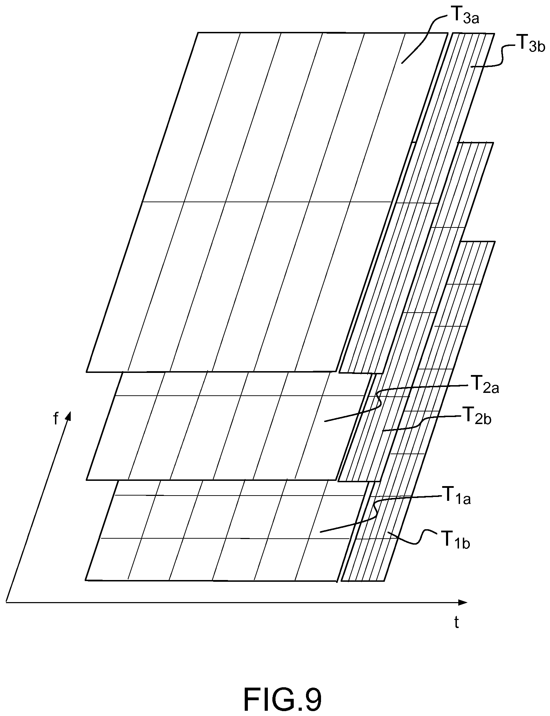

La figure 9 illustre un exemple d'arrangements de trames selon un mode de réalisation particulier de l'invention.

Dans les exemples décrits ci-dessus, on considère qu'une trame est constituée d'une part des unités-temps fréquences réservées à la communication et d'autre part de blocs d'unités génériques réservées en fin de chaque porteuse.

La figure 9 illustre, pour le même exemple que la figure 2, un arrangement différent qui consiste à séparer les unités de communication dans une première trame T1a, T2a, T3a et les unités génériques dans une seconde trame T1b, T2b, T3b. La seconde trame est positionnée temporellement après la première trame.

Un avantage à l'utilisation de deux trames distinctes est que cela nécessite un volume de données de signalisation moins important pour transmettre les caractéristiques en temps et en fréquence des trames aux utilisateurs. Cet avantage est maintenant détaillé dans le cas particulier du standard DVB-RCS2. Comme explicité précédemment, cette norme définit des tables de signalisation pour communiquer aux utilisateurs la structure des trames dans le plan-temps fréquence (table FCT2) et l'allocation précise des unités temps-fréquence dans une trame (table TBTP2).

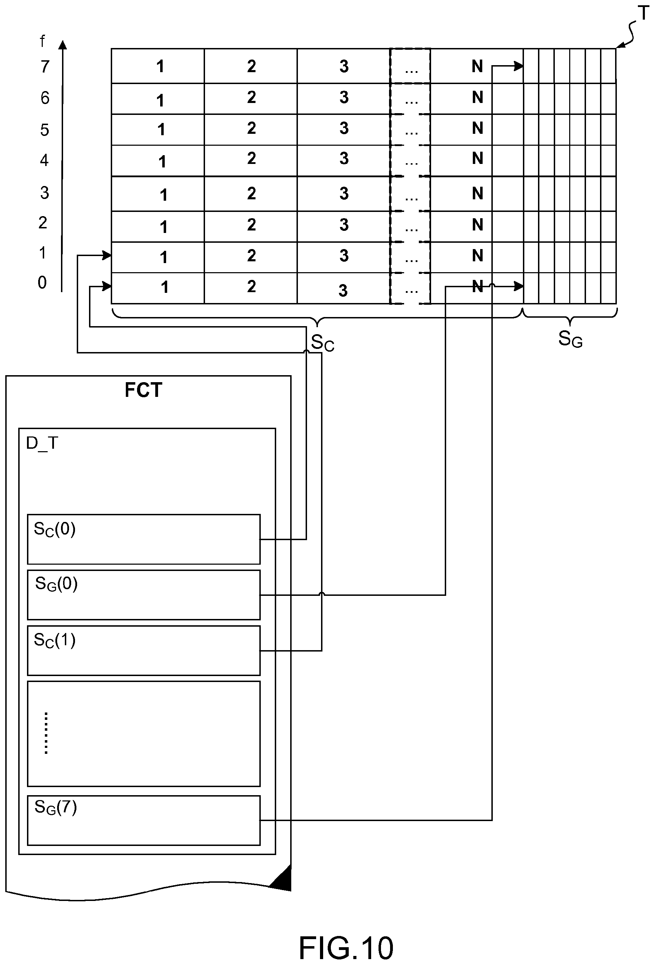

La figure 10 illustre la structure d'une table de signalisation FCT2 de la composition d'une trame T conçue selon le premier mode de réalisation de l'invention, c'est-à-dire le mode de l'invention pour lequel une unique trame est conçue regroupant d'une part les unités temps-fréquence allouées à la communication et en fin de chaque porteuse un bloc d'unités génériques. La section de la trame regroupant les unités allouées à la communication sur chaque porteuse est notée S_{C}. La section de la trame regroupant les unités génériques est notée S_{G}. Dans l'exemple de la figure 10, la trame T comporte 8 porteuses indicées de 0 à 7.

La table de signalisation FCT2 comporte donc la définition D_T d'une seule trame T. Cette définition consiste notamment à identifier le type associé à chaque unité temps-fréquence dans la trame. Dans l'exemple de la figure 10, deux types sont possibles, soit le type « communication », soit le type « générique ». La définition de la trame T se fait en parcourant le plan temps-fréquence selon l'axe des temps puis selon l'axe des fréquences. Autrement dit, la définition des unités est faite pour chaque porteuse successivement. Ainsi, la table FCT2 comporte, pour chaque porteuse, une première section S_{C}(i) définissant les N premières unités temporelles (ou les N premiers intervalles temporels constitués de plusieurs unités de base) comme des unités de communication puis une seconde section S_{G}(i) définissant les K dernières unités temporelles de la porteuse comme unités génériques (dans l'exemple K = 6). Ces deux sections S_{C}(i), S_{G}(i) sont répétées pour chaque porteuse ce qui engendre un nombre de sections dans la table FCT2 égal à 2 fois le nombre de porteuses de la trame.

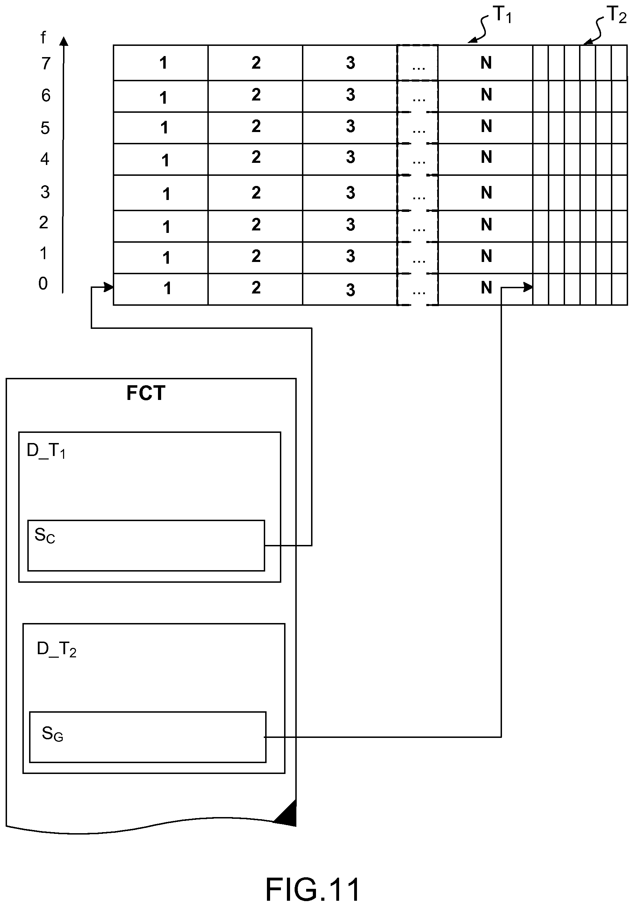

La figure 11 représente, pour le même scénario qu'à la figure 10, un arrangement du plan temps-fréquence selon deux trames séparées T₁, T₂ et la table de signalisation FCT2 correspondante. Celle-ci contient deux définitions D_T1, D_T2 des deux trames associées. Cette fois, comme chaque trame ne comporte qu'un seul type d'unité (soit de communication, soit générique), il n'est nécessaire de définir qu'une seule section S_{C} ou S_{G} à chaque fois en indiquant que le même type est appliqué à l'ensemble des unités de la trame. Ainsi, la table de signalisation FCT2 comporte un volume de données moindre pour un arrangement à deux trames en comparaison avec l'arrangement à une trame unique.

De façon similaire, les tables d'allocation TBTP2, transmises à la fréquence d'une allocation, seront également allégées en volume dans le cas de l'arrangement à deux trames. Cet avantage présente un intérêt important pour limiter le débit de la liaison de communication qui est utilisé pour transmettre des données de signalisation et ainsi augmenter le débit alloué aux communications.

## Revendications

1. Méthode d'allocation dynamique de ressources partagées dans un réseau de communication consistant à définir dans un plan temps-fréquence une super-trame de durée donnée ΔT et de largeur spectrale donnée Δf, constituée d'au moins une trame (T1, T2, T3), définissant une grille temps-fréquence régulière dont une case, appelée unité temps-fréquence, constitue le plus petit intervalle temporel et fréquentiel allouable à un utilisateur dudit réseau au sein de ladite trame, ladite méthode consistant à réserver, sur chaque fréquence porteuse d'une trame (T1, T2, T3), au moins un bloc (B1, B2) d'un nombre K, supérieur ou égal à 1, d'unités temps-fréquence pouvant être dynamiquement allouées à un utilisateur soit pour communiquer soit pour se synchroniser, le choix du nombre d'unités temps-fréquence allouées à un utilisateur pour se synchroniser étant effectué en fonction du nombre d'utilisateurs connectés au réseau de communication.

2. Méthode d'allocation dynamique selon la revendication 1 dans laquelle le nombre d'unités temps-fréquence par trame allouées pour la synchronisation est au moins égal au nombre minimum Nᵤ d'unités temps-fréquence par trame nécessaire pour assurer la synchronisation de tous les utilisateurs connectés, ce nombre minimum Nᵤ étant égal à la valeur arrondie du ratio de la durée d'une super-trame par la période de synchronisation d'un utilisateur, que multiplie le nombre d'utilisateurs connectés au réseau.

3. Méthode d'allocation dynamique selon la revendication 2 dans laquelle on réserve, dans une trame, un nombre N_{B} de blocs (B1, B2) de K unités temps-fréquence pour la synchronisation des utilisateurs, ce nombre N_{B} étant égal à la partie entière par excès du ratio entre ledit nombre minimum Nᵤ d'unités temps-fréquence par trame nécessaire pour assurer la synchronisation de tous les utilisateurs connectés et le nombre K d'unités temps-fréquence par bloc, les autres blocs (ITGC) de K unités temps-fréquence étant réservés pour la communication des utilisateurs.

4. Méthode d'allocation dynamique selon la revendication 3 dans laquelle les blocs (B1, B2) de K unités temps-fréquence réservés pour la synchronisation des utilisateurs sont répartis de façon régulière sur l'ensemble des fréquences porteuses d'une trame.

5. Méthode d'allocation dynamique selon l'une des revendications 3 ou 4 dans laquelle dans les blocs (B1, B2) de K unités temps-fréquence réservés pour la synchronisation des utilisateurs, on alloue un nombre Nᵤ d'unités temps-fréquence (ITGS) à la synchronisation par accès réservé à un utilisateur, ledit nombre Nᵤ étant égal au nombre minimum d'unités temps-fréquence par trame nécessaire pour assurer la synchronisation de tous les utilisateurs connectés, les unités temps-fréquence restantes (ITGSA1, ITGSA2) au sein desdits blocs (B1, B2) étant allouées à la synchronisation des utilisateurs par accès aléatoire ou à la communication des utilisateurs.

6. Méthode d'allocation dynamique selon l'une des revendications précédentes dans laquelle lesdits blocs (B1, B2) réservés pour la synchronisation des utilisateurs sont positionnés en fin de porteuse.

7. Méthode d'allocation dynamique selon l'une des revendications précédentes dans laquelle un bloc de K unités temps-fréquence réservé à la communication des utilisateurs est regroupé pour former une unité de communication.

8. Méthode d'allocation dynamique selon l'une des revendications précédentes dans laquelle, pour allouer à un utilisateur une unité temps-fréquence réservée pour la synchronisation au sein d'un bloc d'une fréquence porteuse :
- on calcule, pour chaque utilisateur connecté audit réseau, le ratio entre la variation de fréquence entre la fréquence porteuse dudit bloc et la dernière fréquence porteuse sur laquelle l'utilisateur a communiqué et l'intervalle temporel entre la dernière unité temps-fréquence utilisée par l'utilisateur pour communiquer et l'unité temps fréquence réservée pour la synchronisation à allouer,
- on alloue ladite unité temps-fréquence réservée pour la synchronisation à l'utilisateur pour lequel ledit ratio est le plus faible.

9. Méthode d'allocation dynamique selon l'une des revendications précédentes dans laquelle une super-trame est constituée de la concaténation d'au moins une première trame (T1a, T2a, T3a) composée uniquement d'unités temps-fréquence allouées à la communication des utilisateurs et d'une seconde trame (T1b, T2b, T3b) composée desdits blocs (ITGS, ITGC) de K unités temps fréquence réservées sur chaque fréquence porteuse pour être dynamiquement allouées à un utilisateur pour communiquer ou pour se synchroniser.

10. Méthode d'allocation dynamique selon l'une des revendications précédentes dans laquelle la configuration d'allocation des unités-temps fréquence de chaque trame (T1a, T2a, T3a, T1b, T2b, T3b) d'une super-trame à la communication ou à la synchronisation est transmise aux utilisateurs périodiquement, avec une période égale à la durée d'une super-trame.

11. Méthode d'allocation dynamique selon l'une des revendications précédentes dans laquelle le nombre K d'unités temps-fréquence par bloc est égal à 6 et peut être décomposé en 6 unités allouées à la synchronisation des utilisateurs ou 3 unités allouées à la synchronisation des utilisateurs et 3 unités, regroupées, allouées à la communication des utilisateurs ou à 6 unités, regroupées, allouées à la communication des utilisateurs.

12. Méthode d'allocation dynamique selon l'une des revendications précédentes dans laquelle ladite méthode est compatible du standard DVB-RCS2.

13. Dispositif (D) d'allocation dynamique de ressources partagées pour la communication et la synchronisation d'une pluralité de terminaux utilisateurs (UE) dans un réseau de communication, le dispositif comprenant des moyens adaptés pour mettre en oeuvre la méthode d'allocation dynamique selon l'une des revendications 1 à 12.

14. Dispositif (D) d'allocation dynamique de ressources partagées selon la revendication 13 dans lequel lesdites ressources allouées sont celles de la voie de retour entre lesdits terminaux utilisateurs (UE) et ledit dispositif.

15. Equipement de gestion de communications (GW) par satellite comportant des moyens pour communiquer avec une pluralité de terminaux utilisateurs (UE) à travers une liaison par satellite selon une voie directe et une voie de retour et un dispositif d'allocation dynamique de ressources partagées sur la voie de retour selon la revendication 14.

## Patentansprüche

1. Verfahren zum dynamischen Zuordnen von Ressourcen, die in einem Kommunikationsnetz gemeinsam genutzt werden, bestehend aus dem Definieren, in einer Zeit-Frequenz-Ebene, eines Super-Frame einer gegebenen Dauer ΔT und einer gegebenen Spektralbreite Δf, gebildet aus mindestens einem Frame (T1, T2, T3), der ein regelmäßiges Zeit-Frequenz-Gitter definiert, von dem ein Fall, Zeit-Frequenz-Einheit genannt, das kleinste Zeit- und Frequenzintervall bildet, das einem Benutzer des Netzes im Innern des Frame zugeordnet werden kann, wobei das Verfahren darin besteht, auf jeder Trägerfrequenz eines Frame (T1, T2, T3) mindestens einen Block (B1, B2) mit einer Anzahl K gleich oder größer als 1 von Zeit-Frequenz-Einheiten zu reservieren, die einem Benutzer entweder für Kommunikation oder für Synchronisation dynamisch zugeordnet werden können, wobei die Wahl der Anzahl von einem Benutzer für Synchronisation zugeordneten Zeit-Frequenz-Einheiten in Abhängigkeit von der Anzahl von am Kommunikationsnetz angeschlossenen Benutzern erfolgt.

2. Dynamisches Zuordnungsverfahren nach Anspruch 1, bei dem die Anzahl von pro Frame für Synchronisation zugeordneten Zeit-Frequenz-Einheiten mindestens gleich der Mindestanzahl Nᵤ von Zeit-Frequenz-Einheiten pro Frame ist, die zum Gewährleisten der Synchronisation aller angeschlossenen Benutzer notwendig ist, wobei diese Mindestanzahl Nᵤ gleich dem gerundeten Wert des Verhältnisses der Dauer eines Super-Frame durch die Synchronisationsperiode eines Benutzers multipliziert mit der Anzahl von am Netz angeschlossenen Benutzern ist.

3. Dynamisches Zuordnungsverfahren nach Anspruch 2, bei dem in einem Frame eine Anzahl N_{B} von Blöcken (B1, B2) von K Zeit-Frequenz-Einheiten zum Synchronisieren der Benutzer reserviert wird, wobei diese Anzahl N_{B} gleich dem überschüssigen ganzzahligen Teil des Verhältnisses zwischen der zum Gewährleisten der Synchronisation aller angeschlossenen Benutzer notwendigen Mindestanzahl Nᵤ von Zeit-Frequenz-Einheiten pro Frame und der Anzahl K von Zeit-Frequenz-Einheiten pro Block ist, wobei die anderen Blöcke (ITGC) von K Zeit-Frequenz-Einheiten für die Kommunikation der Benutzer reserviert sind.

4. Dynamisches Zuordnungsverfahren nach Anspruch 3, bei dem die Blöcke (B1, B2) von K zum Synchronisieren der Benutzer reservierten Zeit-Frequenz-Einheiten auf regelmäßige Weise über die Gesamtheit der Trägerfrequenzen eines Frame verteilt sind.

5. Dynamisches Zuordnungsverfahren nach Anspruch 3 oder 4, bei dem in den Blöcken (B1, B2) von K für die Synchronisation der Benutzer reservierten Zeit-Frequenz-Einheiten eine Anzahl Nᵤ von Zeit-Frequenz-Einheiten (ITGS) für die Synchronisation pro für einen Benutzer reservierten Zugriff zugeordnet wird, wobei die Anzahl Nᵤ gleich einer Mindestanzahl von Zeit-Frequenz-Einheiten pro Frame ist, die zum Gewährleisten der Synchronisation aller angeschlossenen Benutzer notwendig ist, wobei die verbleibenden Zeit-Frequenz-Einheiten (ITGSA1, ITGSA2) im Innern der Blöcke (B1, B2) für die Synchronisieren der Benutzer durch Direktzugriff oder für die Kommunikation der Benutzer zugeordnet werden.

6. Dynamisches Zuordnungsverfahren nach einem der vorherigen Ansprüche, bei dem sich die zum Synchronisation der Benutzer reservierten Blöcke (B1, B2) am Ende des Trägers befinden.

7. Dynamisches Zuordnungsverfahren nach einem der vorherigen Ansprüche, bei dem ein Block von K für die Kommunikation der Benutzer reservierten Zeit-Frequenz-Einheiten zum Bilden einer Kommunikationseinheit gruppiert werden.

8. Dynamisches Zuordnungsverfahren nach einem der vorherigen Ansprüche, wobei zum Zuordnen einer für Synchronisation im Innern eines Blocks einer Trägerfrequenz reservierte Zeit-Frequenz-Einheit zu einem Benutzer:
- für jeden am Netz angeschlossenen Benutzer das Verhältnis zwischen der Frequenzvariation zwischen der Trägerfrequenz des Blocks und der letzten Trägerfrequenz, auf der der Benutzer kommuniziert hat, und dem Zeitintervall zwischen der letzten vom Benutzer zum Kommunizieren benutzten Zeit-Frequenz-Einheit und der für die zuzuordnende Synchronisation reservierten Zeit-Frequenz-Einheit berechnet wird,
- die für die Synchronisation mit dem Benutzer, für den das Verhältnis am schwächsten ist, reservierte Zeit-Frequenz-Einheit zugeordnet wird.

9. Dynamisches Zuordnungsverfahren nach einem der vorherigen Ansprüche, bei dem ein Super-Frame gebildet wird aus der Verkettung von mindestens einem ersten Frame (T1a, T2a, T3a), der nur aus für die Kommunikation von Benutzern zugeordneten Zeit-Frequenz-Einheiten besteht, und einem zweiten Frame (T1b, T2b, T3b), der aus den Blöcken (ITGS, ITGC) von K auf jeder Trägerfrequenz reservierten Zeit-Frequenz-Einheiten besteht, zur dynamischen Zuordnung zu einem Benutzer zum Kommunizieren oder um sich zu synchronisieren.

10. Dynamisches Zuordnungsverfahren nach einem der vorherigen Ansprüche, bei dem die Konfiguration der Zuordnung der Zeit-Frequenz-Einheiten jedes Frame (T1a, T2a, T3a, T1b, T2b, T3b) eines Super-Frame für die Kommunikation oder die Synchronisation periodisch zu den Benutzern gesendet wird, mit einer Periode von gleich der Dauer eines Super-Frame.

11. Dynamisches Zuordnungsverfahren nach einem der vorherigen Ansprüche, bei dem die Anzahl K von Zeit-Frequenz-Einheiten pro Block gleich 6 ist und aus 6 für die Synchronisation von Benutzern zugeordneten Einheiten oder 3 für die Synchronisation der Benutzer zugeordneten Einheiten und 3 Einheiten gebildet sein kann, gruppiert, zugeordnet für die Kommunikation der Benutzer, oder 6 Einheiten, gruppiert, zugeordnet für die Kommunikation der Benutzer.

12. Dynamisches Zuordnungsverfahren nach einem der vorherigen Ansprüche, bei dem das Verfahren mit dem DVB-RCS2 Standard kompatibel ist.

13. Vorrichtung (D) zum dynamischen Zuordnen von Ressourcen, die für die Kommunikation und die Synchronisation von mehreren Benutzerendgeräten (UE) in einem Kommunikationsnetzwerk gemeinsam genutzt werden, wobei die Vorrichtung Mittel umfasst, ausgelegt zum Durchführen des dynamischen Zuordnungsverfahrens nach einem der Ansprüche 1 bis 12.

14. Vorrichtung (D) zum dynamischen Zuordnen von gemeinsam genutzten Ressourcen nach Anspruch 13, wobei die zugeordneten Ressourcen die des Rückkanals zwischen den Benutzerendgeräten (UE) und der Vorrichtung sind.

15. Ausrüstung zum Verwalten von Kommunikationen (GW) per Satellit, umfassend Mittel zum Kommunizieren mit mehreren Benutzerendgeräten (UE) über eine Satellitenverbindung auf einem Direktkanal und einem Rückkanal, und eine Vorrichtung zum dynamischen Zuordnen von gemeinsam genutzten Ressourcen auf dem Rückkanal nach Anspruch 14.

## Claims

1. Method of dynamic allocation of shared resources in a communication network, consisting in defining, in a time-frequency plan, a superframe of a given duration ΔT and a given spectral width Δf, consisting of at least one frame (T1, T2, T3), defining a regular time-frequency grid, of which one square, referred to as a time-frequency unit, constitutes the smallest time and frequency interval allocatable to a user of said network within said frame, said method consisting in reserving, on each carrier frequency of a frame (T1, T2, T3), at least one block (B1, B2) of a number K, greater than or equal to 1, of time-frequency units which can be dynamically allocated to a user for communication or for synchronization, the choice of the number of time-frequency units to be allocated to an user being made according to the number of users connected to the communication network.

2. Dynamic allocation method according to Claim 1, in which the number of time-frequency units per frame allocated for synchronization is at least equal to the minimum number Nᵤ of time-frequency units per frame required to provide the synchronization of all connected users, this minimum number Nᵤ being equal to the rounded value of the ratio of the duration of a superframe to the synchronization period of one user, multiplied by the number of users connected to the network.

3. Dynamic allocation method according to Claim 2, in which a number N_{B} of blocks (B1, B2) of K time-frequency units is reserved in a frame for the synchronization of users, this number N_{B} being equal to the whole part in excess of the ratio between said minimum number Nᵤ of time-frequency units per frame required to provide the synchronization of all connected users and the number K of time-frequency units per block, the other blocks (ITGC) of K time-frequency units being reserved for the communication of users.

4. Dynamic allocation method according to Claim 3, in which the blocks (B1, B2) of K time-frequency units reserved for the synchronization of users are distributed in a regular manner among all of the carrier frequencies of a frame.

5. Dynamic allocation method according to any one of Claims 3 or 4, in which, in the blocks (B1, B2) of K time-frequency units reserved for the synchronization of users, a number Nᵤ of time-frequency units (ITGS) is allocated to synchronization via access reserved for a user, said number Nᵤ being equal to the minimum number of time-frequency units per frame necessary to provide the synchronization of all connected users, the remaining time-frequency units (ITGSA1, ITGSA2) within said blocks (B1, B2) being allocated to the synchronization of users via random access or to the communication of users.

6. Dynamic allocation method according to any one of the preceding claims, in which said blocks (B1, B2) reserved for the synchronization of users are positioned at the carrier end.

7. Dynamic allocation method according to any one of the preceding claims, in which a block of K time-frequency units reserved for the communication of users is combined to form a communication unit.

8. Dynamic allocation method according to any one of the preceding claims, in which, in order to allocate to a user a time-frequency unit reserved for synchronization within a block of a carrier frequency:
- the ratio between the frequency variation between the carrier frequency of said block and the last carrier frequency on which the user has communicated and the time interval between the last time-frequency unit used by the user for communication and the time-frequency unit reserved for synchronization to be allocated is calculated for each user connected to said network,
- said time-frequency unit reserved for synchronization is allocated to the user for whom said ratio is the lowest.

9. Dynamic allocation method according to any one of the preceding claims, in which a superframe is made up of the concatenation of at least one first frame (T1a, T2a, T3a) composed entirely of time-frequency units allocated to the communication of users, and a second frame (T1b, T2b, T3b) composed of said blocks (ITGS, ITGC) of K time-frequency units reserved on each carrier frequency in order to be dynamically allocated to a user for communication or for synchronization.

10. Dynamic allocation method according to any one of the preceding claims, in which the configuration of the allocation of the time-frequency units of each frame (T1a, T2a, T3a, T1b, T2b, T3b) of a superframe for communication or for synchronization is transmitted to the users periodically, with a period equal to the duration of a superframe.

11. Dynamic allocation method according to any one of the preceding claims, in which the number K of time-frequency units per block is equal to 6 and can be broken down into 6 units allocated to the synchronization of users or 3 units allocated to the synchronization of users and 3 units, combined, allocated to the communication of users or to 6 units, combined, allocated to the communication of users.

12. Dynamic allocation method according to any one of the preceding claims, in which said method is compatible with the DVB-RCS2 standard.

13. Device (D) for the dynamic allocation of shared resources for the communication and synchronization of a plurality of user terminals (UE) in a communication network, the device comprising means suitable for carrying out the dynamic allocation method according to any one of claims 1 to 12.

14. Device (D) for the dynamic allocation of shared resources according to Claim 13, in which said allocated resources are those of the return channel between said user terminals (UE) and said device.

15. Satellite communication management device (GW) comprising means to communicate with a plurality of user terminals (UE) via a satellite link over a direct channel and a return channel, and a device for the dynamic allocation of shared resources on the return channel according to Claim 14.
